# EUROPEAN PATENT APPLICATION

(11) **EP 1 517 222 A1**
(43) Date of publication of application: **23.03.2005**
(21) Application number: 04022228.3
(22) Date of filing: 17.09.2004
(51) Int. Cl.: G06F 1/32

(54) **Electronic apparatus that conserves energy**

(30) Priority: 22.09.2003 JP 2003330765
(71) Applicant: BROTHER KOGYO KABUSHIKI KAISHA, Nagoya-shi, Aichi-ken 467-8561 (JP)
(72) Inventor: Koie, Kazuaki, c/o Technology Planning & IP Dpt., Nagoya-shi, Aichi-ken 467-8562 (JP); Kato, Takaaki, c/o Technology Planning & IP Dpt., Nagoya-shi, Aichi-ken 467-8562 (JP); Kaneno, Yoshiyuki,c/o Technology Planning & IP Dpt, Nagoya-shi, Aichi-ken 467-8562 (JP)
(74) Representative: Hofer, Dorothea, Dipl.-Phys.

(57) **Abstract**

An electronic apparatus (1) suppresses consumption of power by saving power for the electronic apparatus main body (50) and a communicating module (20). In a printing apparatus, power saving mode setting processing is carried out if the printing apparatus is not used in a specified time interval. More specifically, a printing portion (41) is changed into a sleep mode and the communicating module (20) is changed to power saving mode depending on an amount of power remaining in a battery (30) and power ON passage time. Further, auto power OFF setting time is changed depending on the amount of power remaining in the battery. For example, the mode of the communicating module is changed among a plural modes classified depending on consumption of power supplied from the battery and used by the communicating module.

## Description

### BACKGROUND OF THE INVENTION

### 1. Field of Invention

The present invention relates to an electronic apparatus provided with a communicating module and more particularly to saving of power in an electronic apparatus provided with a communicating module.

### 2. Description of Related Art

JP 59-188480 A discloses an electronic apparatus which is activated with electric power and, when it is not used in a predetermined time interval, its power is automatically turned off (auto power off function) so as to save power. Further, Japanese Patent No. 2666701 discloses an electronic apparatus which has an energy saving mode that consumes a smaller amount of power than usual and in which the operation mode is changed over to the energy saving mode when it is not used in a predetermined time interval so as to reduce power consumption.

However, even with the auto power off function, in case of an electronic apparatus activated with a battery, the remaining power of the battery decreases before the auto power off function is actuated, such that the voltage drops below a predetermined level and thus, if the power is turned off, the apparatus may not be actuated properly because its supply power is lower than a necessary voltage. In case of the electronic apparatus which changes over to the energy saving mode, the apparatus makes a determination according to a time in which it is not used and changes the operation mode to the energy saving mode without considering the remaining battery power. Thus, if the power is turned off when the remaining battery power is decreased to less than a predetermined voltage, the supply voltage at a next startup time will be low such that the apparatus may not be actuated properly.

In an electronic apparatus provided with a communicating module that communicates with other apparatus, power is consumed in the communicating module as well as in the electronic apparatus main body. Thus, power saving is required not only in the electronic apparatus main body but also in the communicating module.

### SUMMARY OF THE INVENTION

One object of the present invention is to provide an electronic apparatus provided with a communicating module in which power consumption is suppressed by saving power in the electronic apparatus main body and communicating module taking into account the remaining battery power.

According to a first aspect of the present invention, there is provided an electronic apparatus provided with a communicating module that communicates with an external apparatus, having: a battery for supplying power to the electronic apparatus; non-operation time measuring means for measuring a non-operation time in which the electronic apparatus is inactive; power supply shutdown means for, when the non-operation time measured by the non-operation time measuring means exceeds a reference time, shutting down a power from the battery; remainder measuring means for measuring an amount of power remaining in the battery; and reference time changing means for changing the reference time based on the measured amount of power remaining in the battery.

With this structure, the battery supplies power to the electronic apparatus, the non-operation time measuring means measures a non-operation time in which the electronic apparatus is inactive and then, the power supply shutdown means, if the non-operation time measured by the non-operation time measuring means exceeds a reference time, can shut down the supply of power from the battery (auto power off). The remainder measuring means measures the amount of power remaining in the battery and the reference time changing means can change the reference time based on the remaining amount of power in the battery measured by the remainder measuring means. Thus, the reference time for auto power off can be changed based on the remaining amount of power in the battery, so that the reference time can be set precisely based on the remaining amount of power in the battery by shortening the reference time for auto power off if the remaining amount of power in the battery is small, or prolonging the reference time for auto power off if the remaining amount of power in the battery is sufficient. Consequently, before the supply of power is interrupted by the auto power off, the amount of power remaining in the battery will not diminish to a degree such that the supply of power cannot be re-established when it is time to re-start the apparatus.

According to another aspect of the present invention, there is provided an electronic apparatus provided with a communicating module by which the electronic apparatus communicates with an external apparatus, the communication module having plural modes that differ from each other in their rates of power consumption; and mode changing means for changing the mode of the communication module between the plural modes based on a comparison of a measured value to at least one threshold.

With this structure, the battery supplies power to the electronic apparatus and the mode changing means has plural modes classified depending on consumption of power supplied from the battery and used by the communicating module and can change the mode. Therefore, by changing the mode to a mode in which consumption of power used by the communicating module is small, power saving for the electronic apparatus can be obtained.

According to still another aspect of the present invention, there is provided an electronic apparatus provided with a communicating module that communicates with an external apparatus, having: a battery for supplying power to the electronic apparatus; non-operation time measuring means for measuring a non-operation time in which the electronic apparatus is inactive; power supply shutdown means for, when the non-operation time measured by the non-operation time measuring means exceeds a reference time, shutting down a power from the battery; remainder measuring means for measuring the amount of power remaining in the battery; reference time changing means for changing the reference time based on the amount of power remaining in the battery measured by the remainder measuring means; and mode changing means, which has plural modes classified depending on consumption of power supplied from the battery and used by the communicating module, for changing the mode.

With this structure, the battery supplies power to the electronic apparatus, the non-operation time measuring means measures a non-operation time in which the electronic apparatus is inactive, the power supply shutdown means, if the non-operation time measured by the non-operation time measuring means exceeds the reference time, shuts down the supply of power from the battery, the remainder measuring means measures the amount of power remaining in the battery, the reference time changing means changes the reference time based on the amount of power remaining in the battery measured by the remainder measuring means, the mode changeover means has plural modes classified depending on consumption of power supplied from the battery and used by the communicating module, and changes the mode. Therefore, because the reference time for auto power off can be changed based on the amount of power remaining in the battery, the reference time can be set precisely based on the amount of power remaining in the battery by shortening the reference time for auto power off if the amount of power remaining in the battery is small, or by prolonging the reference time for auto power off if the amount of power remaining in the battery is sufficient.
Consequently, there never occurs such an event that the amount of power remaining in the battery diminishes to a level that is too low before the supply of power is shut down by auto power off. Additionally, by changing the mode to a mode in which the amount of power used by the communicating module is small, power required by the electronic apparatus can be saved. Thus, the reference time for auto power off can be changed while saving power for the communicating module by changing the mode.

In the electronic apparatus, the reference time changing means may shorten the reference time if the amount of power remaining in the battery is lower than a specified remainder value.

With this structure, the reference time changing means can shorten the reference time if the amount of power remaining in the battery is below the specified remainder value. Therefore, because the reference time can be shortened when the amount of power remaining in the battery is reduced, the electronic apparatus can be terminated properly by executing auto power off before the battery is consumed completely.

The electronic apparatus may further include: remainder measuring means for measuring the amount of power remaining in the battery; and first mode changeover control means for changing the mode by the mode changing means based on the amount of power remaining in the battery measured by the remainder measuring means.

With this structure, the remainder measuring means can measure the amount of power remaining in the battery and the first mode changeover control means can change the mode using the mode changing means based on the amount of power remaining in the battery measured by the remainder measuring means. Thus, because the mode classified depending on the consumption of power by the communicating module can be changed based on the amount of power remaining in the battery, if the amount of power remaining in the battery is large, a mode having a low power saving rate is used, and if the amount of power remaining in the battery is small, a mode having a smaller power consumption and a large power saving rate is used, so that effective power saving can be performed.

In the electronic apparatus, the first mode changeover control means may, when the amount of power remaining in the battery measured by the remainder measuring means is below a specified remainder value, change the mode using the mode changing means.

With this structure, the first mode changeover control means can change the mode using the mode changing means if the amount of power remaining in the battery measured by the remainder measuring means is below a specified remainder value.
Therefore, if the amount of power remaining in the battery is small, the mode can be changed to a mode having a small power consumption.

In the electronic apparatus, the first mode changeover control means may, if the amount of power remaining in the battery measured by the remainder measuring means exceeds a specified remainder value, change the mode to a first mode using the mode changing means and if the amount of power remaining in the battery is below the specified remainder value, changes the mode to a second mode in which consumption of power by the communicating module is lower than in the first mode.

With this structure, the first mode changeover control means changes the mode to the first mode using the mode changing means if the amount of power remaining in the battery measured by the remainder measuring means exceeds the specified remainder value and if the amount of power remaining in the battery is below the specified remainder value, can change, using the mode changing means, the mode to the second mode in which consumption of power by the communicating module is smaller than in the first mode. Thus, this electronic apparatus has two modes which are different in consumption of power used by the communicating module and the mode can be determined depending on whether the amount of power remaining in the battery is over the specified remainder value or below the specified remainder value. If the amount of power remaining in the battery is below the specified value and is small, the second mode in which power consumption is small and the power saving rate is large is used. If the amount of power remaining in the battery is over the specified value and is not small, a mode having a smaller power saving rate than the second mode is used. Because the mode can be selected depending on the amount of power remaining in the battery, effective power saving can be achieved.

The electronic apparatus may further include: power supply time measuring means for measuring a power supply time during which power has been supplied from the battery to the electronic apparatus; and second mode changeover control means for changing the mode using the mode changing means based on the power supply time measured by the power supply time measuring means.

With this structure, the power supply time measuring means measures a power supply time that has passed since power has begun to be supplied from the battery to the electronic apparatus and the second mode changeover control means can change the mode using the mode changing means based on a power supply time measured by the power supply time measuring means. Because the mode classified depending on consumption of power by the communicating module can be changed, depending on a time passed since the electronic apparatus is turned on and power has been supplied from the battery, if power has been supplied for a long time, that is, much power has been consumed, the mode is changed to a mode having a high power saving rate, and if power has been supplied only for a short time, that is, not so much power has been consumed, the mode is changed to a mode having a low power saving rate. Consequently, effective power saving can be attained.

In the electronic apparatus, the second mode changeover control means, if the power supply time measured by the power supply time measuring means is over a specified time, changes the mode using the mode changing means.

With this structure, the second mode changeover control means can change the mode using the mode changing means if the power supply time measured by the power supply time measuring means is over the specified time. Thus, if the power supply time is over the specified time and much power has been consumed, the mode classified depending on power consumption by the communicating module can be changed.

In the electronic apparatus, the second mode changeover control means may, if the power supply time measured by the power supply time measuring means is less than a specified time, change to the first mode using the mode changing means and if the power supply time is over the specified time, change to a second mode in which consumption of power used by the communicating module is lower than in the first mode.

With this structure, the second mode changeover control means can change to the first mode using the mode changing means if a power supply time measured by the power supply time measuring means is less than the specified time and if the power supply time is over the specified time, can change to the second mode in which consumption of power used by the communicating module is smaller than in the first mode, using the mode changing means. Thus, if the power supply time is over the specified time and it is considered that much power has been consumed, the mode is changed to the second mode in which consumption of power by the communicating module is small, thereby effective power saving being achieved.

The electronic apparatus may further include: remainder measuring means for measuring the amount of power remaining in the battery; power supply time measuring means for measuring a power supply time that has passed since a power has begun to be supplied from the battery to the electronic apparatus; and third mode changeover control means for changing the mode by the mode changing means based on the amount of power remaining in the battery measured by the remainder measuring means and the power supply time measured by the power supply time measuring means.

With this structure, the remainder measuring means measures the amount of power remaining in the battery, the power supply time measuring means can measure a power supply time that has passed since power has begun to be supplied from the battery to the electronic apparatus, and the third mode changeover control means can change the mode using the mode changing means based on the amount of power remaining in the battery measured by the remainder measuring means and the power supply time measured by the power supply time measuring means. Thus, the mode can be determined and changed according to both the amount of power remaining in the battery and the power supply time or the consumption of the battery, thereby effective power saving can be attained.

In the electronic apparatus, the third mode changeover control means may, if a combination of the amount of power remaining in the battery measured by the remainder measuring means and the power supply time measured by the power supply time measuring means falls under a specified type classified depending on a combination of the amount of power remaining in the battery and the power supply time, change the mode using the mode changing means.

With this structure, the third mode changeover control means can, if a combination of the amount of power remaining in the battery measured by the remainder measuring means and the power supply time measured by the power supply time measuring means falls under a specified type classified depending on the amount of power remaining in battery and the power supply time, change the mode using the mode changing means. Thus, the mode can be determined and changed according to both the amount of power remaining in the battery and the power supply time or the consumption of the battery, thereby effective power saving can be attained.

In the electronic apparatus, the third mode changeover control means may, if the amount of power remaining in the battery measured by the remainder measuring means is over the first remainder value while the power supply time measured by the power supply time measuring means is over a specified time and if the amount of power remaining in the battery is equal to or greater than a second remainder value, which is less than the first remainder value, and less than the first remainder value while the power supply time is less than a specified time, change the mode to a first mode using the mode changing means. If the amount of power remaining in the battery is the second remainder value and less than the first remainder value while the power supply time is over the specified time, the third mode changeover control means may change the mode to a second mode in which consumption of power by the communicating module is smaller than in the first mode. If the amount of power remaining in the battery is less than the second remainder value, the third mode changeover control means may change the mode to a third mode in which consumption of power by the communicating module is smaller than in the second mode.

With this structure, the third mode changeover control means can, if the amount of power remaining in the battery measured by the remainder measuring means is over the first remainder value while the power supply time measured by the power supply time measuring means is over a specified time and if the amount of power remaining in the battery is a equal to or greater than a second remainder value, which is less than the first remainder value, and less than the first remainder value while the power supply time is less than a specified time, change the mode to a first mode using the mode changing means. Further, if the amount of power remaining in the battery is the second remainder value and less than the first remainder value while the power supply time is over the specified time, the mode is changed to a second mode in which consumption of power by the communicating module is smaller than in the first mode. If the amount of power remaining in the battery is less than the second remainder value, the mode is changed to a third mode in which consumption of power by the communicating module is smaller than in the second mode. Thus, the mode can be changed depending on a combination of the amount of power remaining in the battery and the power supply time, that is, a case where the power supply time is long although the amount of power remaining in the battery is not small, a case where the power supply time is short although the amount of power remaining in the battery is small, a case where the power supply time is long although the amount of power remaining in the battery is small and a case where the amount of power remaining in the battery is further smaller. Consequently, consumption of power used by the communicating module is changed thereby effective power saving can be attained.

### BRIEF DESCRIPTION OF THE DRAWINGS

Hereinafter, embodiments of the present invention will be described in detail with reference to the accompanying drawings.

FIG. 1 is a perspective view of a printing apparatus 1 according to an embodiment of the invention;

FIG. 2 is a block diagram showing the electric structure of the printing apparatus according to the embodiment of the invention;

FIG. 3A is a timing chart of inquiry scanning according to the embodiment of the invention;

FIG. 3B is a timing chart of call scanning according to the embodiment of the invention;

FIG. 4 is a conceptual diagram of a sleep enable time table according to the embodiment of the invention;

FIG. 5 is a flow chart of power saving processing according to the embodiment of the invention; and

FIG. 6 is a flow chart of power saving mode setting processing to be carried out during power saving processing according to the embodiment of the invention.

### DETAILED DESCRIPTION OF EXEMPLARY EMBODIMENTS

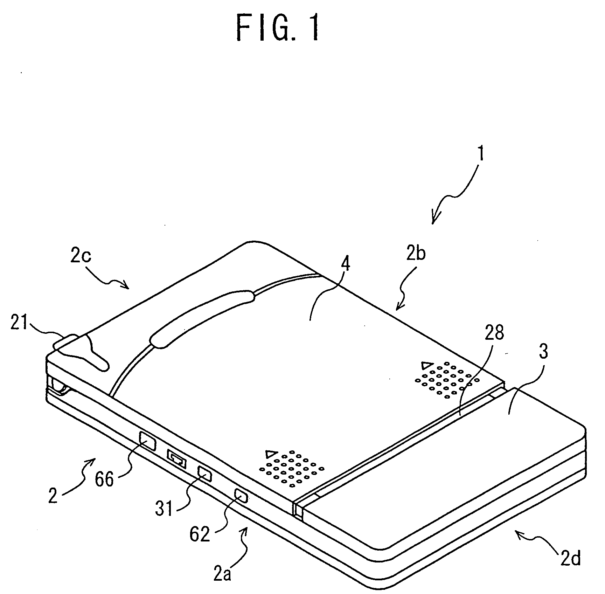

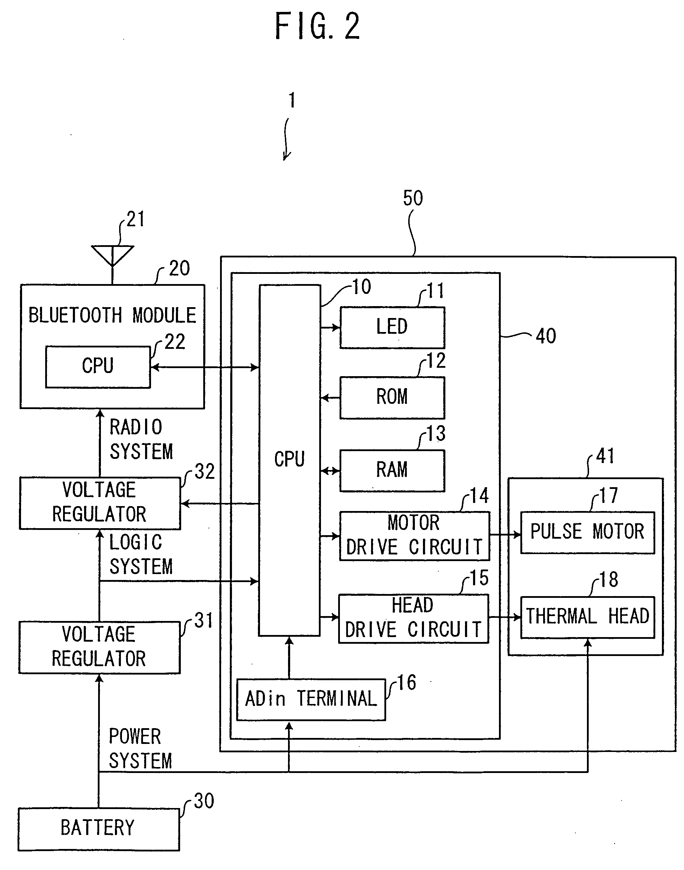

Hereinafter, an embodiment of the present invention will be described with reference to the accompanying drawings. FIG. 1 is a perspective view of a printing apparatus 1, which is an electronic apparatus provided with a communicating module of an embodiment of the present invention. This printing apparatus 1 is a portable mobile printer, which is provided with a Bluetooth module 20 (see FIG. 2) as a communicating module and can be connected to a network or an external apparatus. According to this embodiment, print data and print instruction are transmitted from a host terminal (not shown) which is an external apparatus, and the printing apparatus 1 receives the print data and print instruction through the Bluetooth module 20.

As shown in FIG. 1, a main body case 2 of the printing apparatus 1 has a substantially rectangular shape in its plan view, which is a substantially A6 size having a length of about 16 cm and a width of about 10 cm and is a substantially rectangular solid having a depth of about 2 cm and whose top face is openable. The main body case 2 has case side faces 2a, 2b, 2c, 2d, and various kinds of interfaces and the like are disposed substantially in the middle of the case side face 2a along the length direction of the case side face 2a. That is, an AC adaptor connector 62 for receiving power, a USB connector 31 for executing communication with an external apparatus based on the USB standard and a power switch 66 for turning ON/OFF the power of the printing apparatus 1 are provided on the case side face 2a in this order from the right side thereof. A Bluetooth antenna 21 for executing communication with the external apparatus based on the Bluetooth standard is protruded from substantially the left end portion of the case side face 2c.

A CPU 10, the Bluetooth module 20, a battery 30 and the like (see FIG. 2) are provided inside the main body case 2. A fixed cover 3 occupying about 1/4 of the main body top face is provided near an end portion in the length direction of the main body case 2. A printing mechanism portion (not shown) including a paper feed roller (not shown) for feeding paper, a thermal head 18 (see FIG. 2) for printing by heat and the like is provided inside the main body case 2 covered with the fixed cover 3. An accommodation portion (not shown) accommodating paper to be printed is provided in a portion other than the fixed cover 3 on the top face of the main body 2 and covered with a case cover 4. A discharge port 28 for discharging a printed paper from the rear end of the printer is provided between the fixed cover 3 and the case cover 4.

Next, the electric structure of the printing apparatus 1 will be described with reference to FIG. 2. FIG. 2 is a block diagram showing the electric structure of the printing apparatus 1. The printing apparatus 1 comprises a printing portion 50 and the Bluetooth module 20. The printing portion 50 is comprised of a drive portion 41 including a pulse motor 17 for feeding paper and the thermal head 18 for printing by heat and a print control portion 40 for controlling printing. The print control portion 40 includes the CPU 10 for controlling printing, a LED 11 which indicates whether or not recharging of a battery is necessary, a ROM 12 which stores control programs, various kinds of data, initial values and the like, a RAM 13 which stores data values generated during operation temporarily, a motor drive circuit 14 for driving the pulse motor, a head drive circuit 15 for driving the thermal head 18, and an ADin terminal 16 for fetching in power supplied from the battery 30 and carrying out AD conversion. The LED 11, ROM 12, RAM 13, motor drive circuit 14, head drive circuit 15, and ADin terminal 16 are connected to the CPU 10.

The Bluetooth module 20 has the antenna 21 for communicating with a CPU 22 for controlling communication. An external apparatus and the CPU 22 are connected to the CPU 10 of the printing portion 50. The CPU 10 and CPU 22 exchange commands, so that a print instruction which the Bluetooth module 20 received from a host terminal is transferred to the CPU 10, or the Bluetooth module 20 is set up from the CPU 10.

The printing apparatus 1 has the battery 30 that supplies a power to the printing apparatus 1. The battery 30 is connected to a voltage regulator 31 and further to a voltage regulator 32. The printing apparatus 1 of the present invention is generally divided into a power system, a logic system and a radio system. The voltage of the power system is 7.4 V, and is supplied from the battery 30 to the print control portion 40 and drive portion 41. The voltage of the logic system is 5 V and is supplied to the print control portion 40 after it is transformed to 5 V by the voltage regulator 31. The voltage of the radio system is 3 V and when the voltage regulator 32 receives a power ON signal from the CPU 10, a voltage received from the voltage regulator 31 is transformed to 3V and then supplied to the Bluetooth module 20. Meanwhile, the ADin terminal 16 is a terminal for the CPU 10 to detect an amount of power remaining in the battery 30, and AD-converts the voltage of the battery 30 and inputs the result to the CPU 10.

Here, the power saving method of this embodiment will be described. According to this embodiment, the printing portion 50 and the Bluetooth module 20 each have a power saving mode and if there is no print instruction from the host terminal, which gives the printing apparatus 1 a print instruction, in a predetermined period, the power of the printing apparatus 1 is turned OFF (auto power off).

The printing portion 50 has a sleep mode as a power saving mode and this mode actuates circuits supplied with logic system power except the CPU 10 with its saved power and keeps the pulse motor 17 and the thermal head 18 in a non-powered state of circuits supplied with a power through the power system. Although under normal mode, not sleep mode, a power of 150 mW is consumed, only 10 µW is consumed under the sleep mode.

The Bluetooth module 20 contains three power saving modes, low level power saving mode, middle level power saving mode and high level power saving mode. This Bluetooth module 20 scans to transmit a predetermined electric wave to connect to the host terminal and most of the power to be consumed in the Bluetooth module 20 is consumed by this scanning. This scanning is not always carried out continuously, but is executed repeatedly only in a specific period every predetermined period (cycle). The printing apparatus 1 of this embodiment executes inquiry scan and call scan, which are described below. The inquiry scan responds to a device retrieval request for retrieving a device provided with the Bluetooth module having a host terminal in its surrounding and the call scan responds to a connection request from the host terminal to a specific device recognized in its device retrieval request.

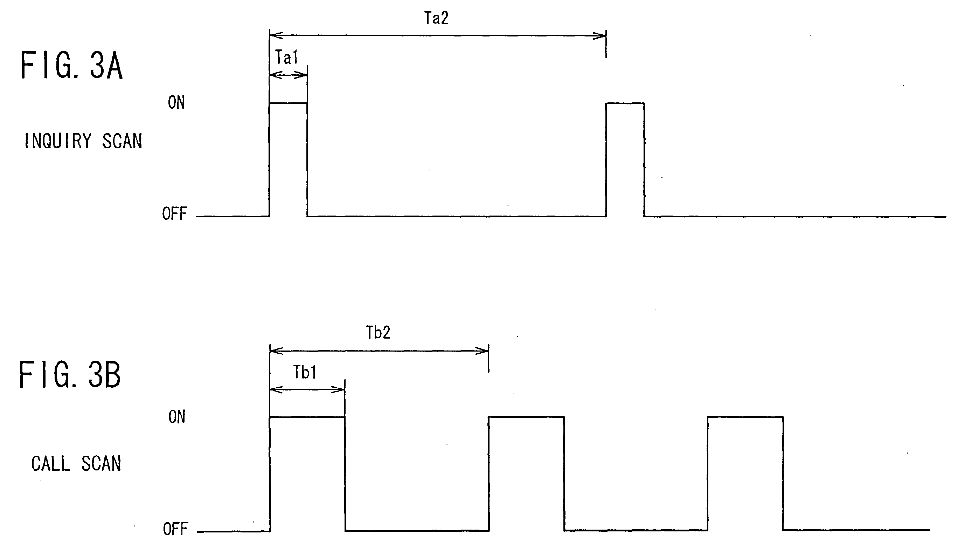

The inquiry scan and call scan will be described with reference to FIGS. 3A and 3B. FIG. 3A is a timing chart for the inquiry scan for responding to a device retrieval request from the host terminal. Scan is ON in a period of Ta1 of every cycle of Ta2 to transmit an electric wave. In the portion of the cycle Ta2 other than Ta1, scan is OFF so that no electric wave is transmitted. Because as the cycle Ta2 becomes shorter and the period of Ta1 becomes longer, the scan frequency is increased so that the scan time is prolonged, the response time of the host terminal is improved but consumption of power is increased. FIG. 3B is a timing chart of the call scan which responds to a connection request from the host. Scan is ON in the period of Tb1 of every cycle of Tb2 to transmit an electric wave and in the remainder of the cycle Tb2, scan is OFF so that no electric wave is transmitted. The call scan as well as the inquiry scan increases the scan frequency as the cycle of Tb2 becomes shorter and the period of Tb becomes longer, so that scan time is prolonged. Thus, although response time of the host terminal is improved, consumption of power is increased. In the meantime, because it is desirable that the response time to the call scan is higher than the response time to the inquiry scan, it is set up that the cycle Tb2 is shorter than the cycle of Ta2 while the period of Tb1 is longer than the period of Ta1 so that the scan frequency is increased and the scan time is prolonged.

According to this embodiment, the cycles and periods of the inquiry scan and call scan are set up for every power saving mode in the Bluetooth module 20, so that consumption of power is set smaller in the order of the low level power saving mode, the middle level power saving mode and the high level power saving mode. The low level power saving mode is an example of a "first mode", the middle level power saving mode is an example of a "second power saving mode" and the high level power saving mode is an example of a "third mode".

In normal mode, i.e., when not in any power saving mode, the inquiry scan period Ta1 is 11 ms, the inquiry scan cycle Ta2 is 1000 ms, the call scan period Tb1 is 50 ms, the call scan cycle Tb2 is 500 ms and power consumption of the Bluetooth module 20 at this time is 48 mW. In the low level power saving mode, the inquiry scan cycle Ta2 is set longer than the normal mode and the call scan period Tb1 is set shorter, while the call scan cycle Tb2 is set longer. More specifically, the inquiry scan period Ta1 is 11 ms, the inquiry scan cycle Ta2 is 1200 ms, the call scan period Tb1 is 11ms and the call scan cycle Tb2 is 1200 ms, so that the frequency of transmission of the electric wave is smaller than the normal mode and its transmission time is shorter. Thus, the power consumption of the Bluetooth module 20 in the low level power saving mode is 20 mW. In the middle level power saving mode, the inquiry scan period Ta1 and call scan period Tb1 are set shorter than the low level power saving mode and the inquiry scan cycle Ta2 and call scan cycle Tb2 are set longer. More specifically, the inquiry scan period Ta1 is 8 ms, the inquiry scan cycle Ta2 is 1500 ms, the call scan period Tb1 is 8 ms and the call scan cycle Tb2 is 1500 ms, so that the frequency of transmission of electric waves is smaller than the low level power saving mode and its transmission time is shorter. Thus, power consumption of the Bluetooth module under the middle level power saving mode is 15 mW. Under the high level power saving mode, the inquiry scan period Ta1 and the call scan period Tb1 are set shorter than the middle level power saving mode and the inquiry scan cycle Ta2 and call scan cycle Tb2 are set longer. More specifically, the frequency of transmission of electric waves is reduced as compared to the middle level power saving mode and the transmission time is also reduced. Thus, under the high level power saving mode, the inquiry scan period Ta1 is 5 ms, the inquiry scan cycle Ta2 is 1800 ms, the call scan period Tb1 is 5 ms and the call scan cycle Tb2 is 1800 ms, so that the frequency of transmission of electric waves is reduced as compared to the middle level power saving mode and the transmission time is shorter. Therefore, power consumption of the Bluetooth module 20 under the high level power saving mode is 10 mW.

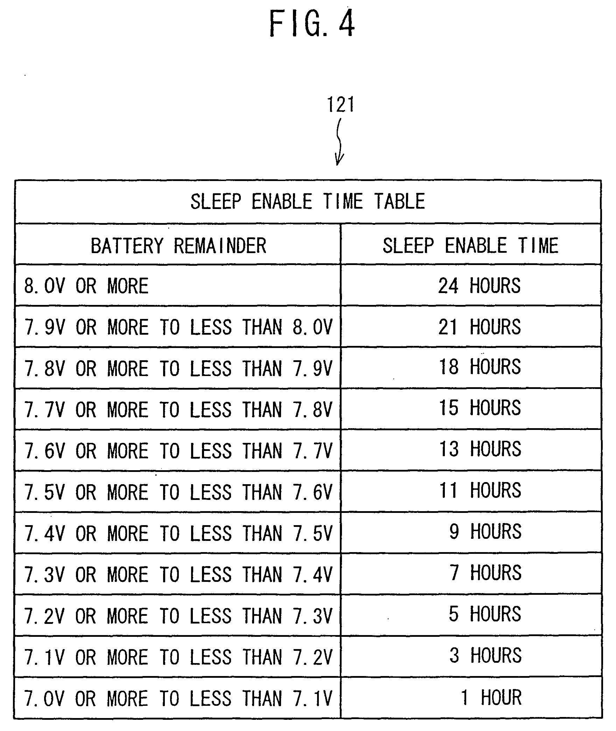

If the printing portion 50 is left in the sleep mode, the voltage output from the battery 30 drops gradually and finally, the output of the voltage regulator 31 cannot hold the voltage of the logic system. If the voltage of the battery drops further, the voltage of the logic system reaches a reset voltage thereby resetting the CPU 10. Then, if the voltage drops further, the power is interrupted. Such a power interruption is not preferable for the CPU 10. An actuation enable time under the sleep mode to the power remainder of the battery 30 is stored in the ROM 12 (see sleep enable time table 121 and FIG. 4) and the sleep enable time is set up according to the table. Then, if the sleep enable time is passed without any print instruction from the host terminal, auto power off is activated.

The sleep enable time will be described with reference to FIG. 4. FIG. 4 is a conceptual diagram of a sleep enable time table 121. This sleep enable time table is stored in the ROM 12. The sleep enable time table stores the sleep enable time corresponding to the amount of power remaining in the battery. If the amount of power remaining in the battery is 8.0 V or more, the sleep enable time is 24 hours. If the amount of power remaining in the battery is 7.9 V and more to less than 8.0 V, the sleep enable time is 21 hours. If the amount of power remaining in the battery is 7.8 or more to less than 7.9 V, the sleep enable time is 18 hours. If the amount of power remaining in the battery remainder is 7.7V or more to less than 7.8 V, the sleep enable time is 15 hours. If the amount of power remaining in the battery is 7.6 V or more to less than 7.7 V, the sleep enable time is 13 hours. If the amount of power remaining in the battery is 7.5V or more to less than 7.6 V, the sleep enable time is 11 hours. If the amount of power remaining in the battery is 7.4V or more to less than 7.5V, the sleep enable time is 9 hours. If the amount of power remaining in the battery is 7.3 V or more to less than 7.4 V, the sleep enable time is 7 hours. If the amount of power remaining in the battery is 7.2 V or more to less than 7.3 V, the sleep enable time is 5 hours. If the amount of power remaining in the battery is 7.1 V or more to less than 7.2 V, the sleep enable time is 3 hours. If the amount of power remaining in the battery is 7.0 V or more to less than 7.1 V, the sleep enable time is 1 hour.

Commands exchanged between the CPU 10 and CPU 22 and the state of the Bluetooth module will be described. The Bluetooth module 20 changes between three states: command mode, scan mode and connection mode. The command mode indicates a state for setting the sleep enable time, scanning period and cycle based on a command transmitted from the CPU 10 of the print control portion 40. The scan mode indicates a state for executing the inquiry scan or call scan. The connection mode indicates a state in which a device is connected to the host terminal.

When the power is turned ON, the Bluetooth module 20 is in command mode, so that if a scan start command is received from the CPU 10 of the print control portion 40, the operation changes to the scan mode. Further, if a RESET command is received from the CPU 10 during the scan mode, the operation mode changes to command mode. If a connection request is received from the host terminal during the scan mode, the operation mode changes to the connection mode and if a connection to the host terminal is interrupted, the operation changes to the scan mode.

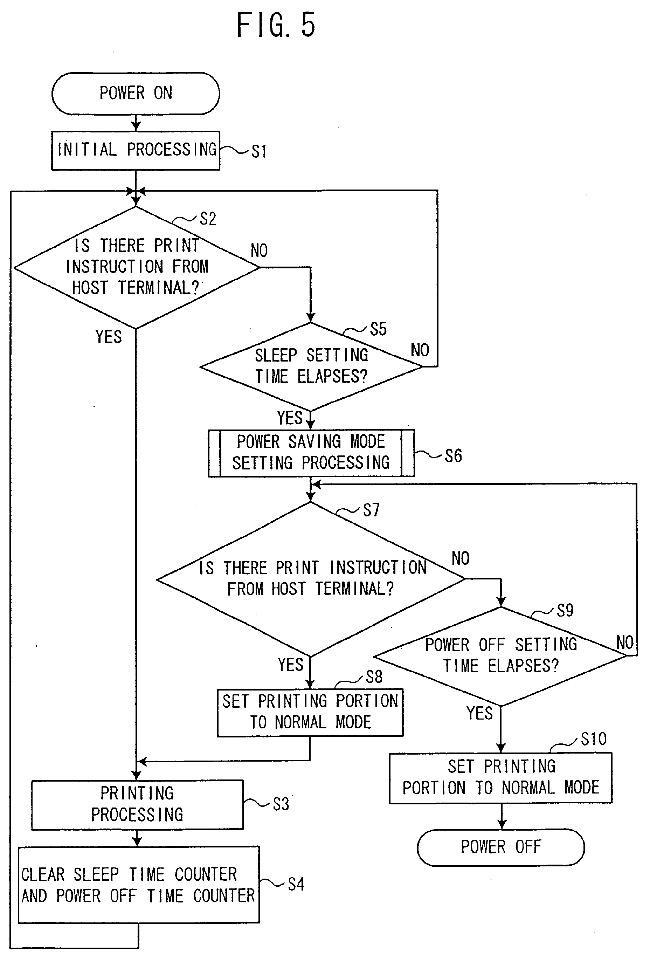

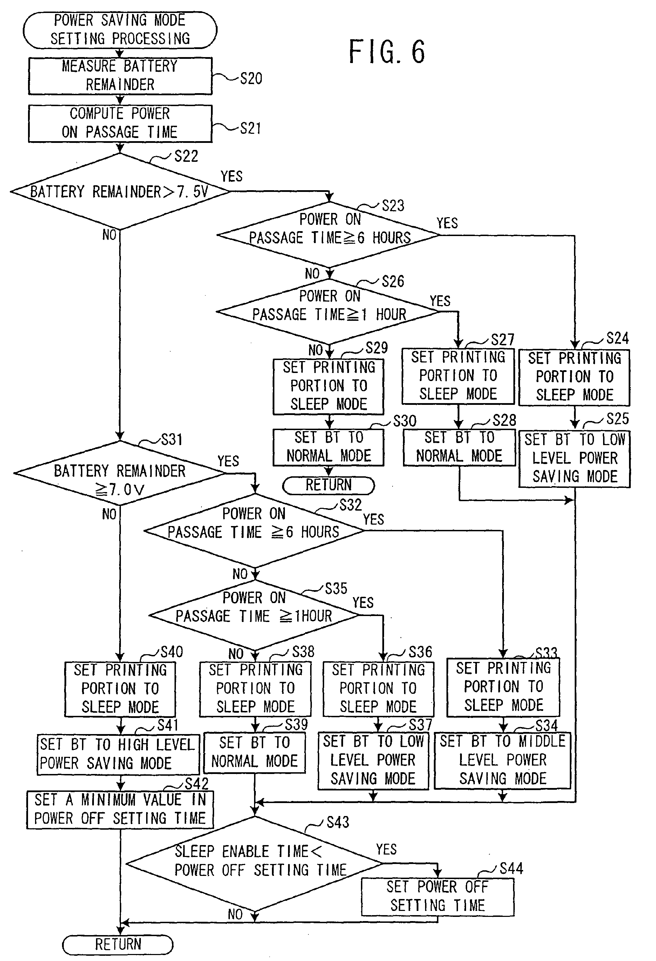

The power saving processing which are carried out in the CPU 10 of the printing portion 50 and the CPU 22 of the Bluetooth module will be described with reference to FIGS. 5 and 6. FIG. 5 is a flow chart of the power saving processing. FIG. 6 is a flow chart of the power saving setting processing carried out in power saving processing. This power saving processing is started when the printing apparatus 1 is powered ON and is always executed during the operation of the printing apparatus 1 in order to check the amount of power remaining in the battery 30, a time passed since the print processing is executed and the like and change to the power saving mode for the printing portion 50 and Bluetooth module 20.

If the printing apparatus 1 is powered ON, initial processing is carried out (S1). More specifically, In the CPU 22, the auto power off setting time is set to 12 hours, the scan cycle and scan period of the Bluetooth module 20 are set to normal mode values, and the sleep time counter and power off time counter values are set to initial value "0". In addition, in the CPU 10, the auto power off setting time is set to 12 hours, current time is stored as power on time, and sleep setting time is set to three minutes. The printing portion 50 is actuated by power at normal mode. Then, the CPU 10 transmits a scan start command to the CPU 22 so that the CPU 22 switches to scan mode. After the CPU 22 switches to scan mode, the inquiry scan and call scan are carried out continuously. The sleep time counter is counted up by the CPU 10 and the power off time counter is counted up by the CPU 22 when the CPU 22 is in scan mode.

The auto power off setting time is an example of a "reference time", a time measured by the sleep time counter is an example of a "non-operation time" and the sleep time counter is an example of a non-operation time measuring means. In the meantime, in the flow chart, the Bluetooth module 20 is abbreviated as BT.

Next, in the CPU 22 in scan mode, whether or not a print instruction is received from a host terminal is determined (S2). If the print instruction is received (S2: YES), print processing is carried out (S3). More specifically, the CPU 22 moves to connection mode and transmits print data and print instruction data from the host to the CPU 10. Then, the CPU 10 gives instructions to the motor drive circuit 14 and head drive circuit 15 and the like to execute printing. Then, if connection from the host is interrupted, the CPU returns to scan mode. Then, the values on the sleep time counter and power off time counter are cleared to "0" (S4) and the processing returns to S2, in which a print instruction from the host is recognized.

If no print instruction is received (S2: NO), whether or not the sleep setting time elapses is determined depending on whether or not a time indicated by the sleep time counter value is over the sleep setting time (S5). According to this embodiment, the sleep setting time is three minutes set by initial processing (S1). If the sleep setting time has not elapsed (S5: NO), whether or not a print instruction is dispatched from the host is repeatedly determined (S2). If the sleep setting time elapses (S5:YES) without any print instruction from the host (S2: NO), power saving mode setting processing is carried out (S6). In this power saving mode setting processing, the printing portion 50 is set to sleep mode and a determination as to whether or not the Bluetooth module 20 is turned to power saving mode is carried out based on the amount of power remaining in the battery 30 and a passage time from power ON. If a specified condition is satisfied, the power saving mode is set up. This power saving mode setting processing will be described with reference to FIG. 6.

If the power saving mode setting processing ends, whether or not a print instruction is dispatched from the host subsequently is determined (S7). At this point of time, the CPU 22 is in the scan mode. If no print instruction is dispatched from the host (S7: NO), whether or not the power off setting time elapses is determined depending on whether or not a time indicated by the power off time counter value is over a power off setting time (S9).

If the power off setting time has not elapsed (S9: NO), the processing returns to S7, in which whether or not a print instruction is dispatched from the host is determined (S7). If a print instruction is dispatched from the host (S7: YES), the CPU 22 transmits a CONNECT signal to the CPU 10 so as to change the CPU 10 from sleep mode to normal mode (S8). Then, the print processing is carried out (S3) and the values on the sleep time counter and power off time counter are cleared to "0" (S4) and the processing returns to S2, in which the print instruction from the host is verified.

If the power off setting time elapses (S9: YES) without any print instruction from the host (S7: NO), the CPU 22 transmits a TIMEUP signal to the CPU 10 so as to turn the printing portion 50 into normal mode (S10). After that, power off of the printing apparatus 1 is carried out in normal procedure (corresponding to "power supply shutdown means"). Here, because the power off setting time is a shorter time of the time set up by the initial processing (S1) or the sleep enable time determined based on the amount of power remaining in the battery 30 in the power saving mode setting processing (S6), the auto power off is enabled, in which the remaining power allowing a next startup to be executed properly is held when the printing apparatus 1 is powered off normally.

Here, the power saving mode setting processing will be described. According to this embodiment, the power saving mode of the Bluetooth module 20 is determined by an amount of power remaining in the battery measured by AD-converting the voltage of a battery through the ADin terminal 16 and a power ON passage time which is a passage time since power ON and the mode selection is carried out. In the meantime, the ADin terminal is an example of a "remainder measuring means", and the power ON passage time is an example of a "power supply time". The "first remainder value" of the amount of power remaining in the battery is 7.5 V and the "second remainder value" is 7.0 V and the "specified time" is 6 hours.

If the amount of power remaining in the battery exceeds 7.5 V while the power ON passage time is over 6 hours (case 1), the low level power saving mode is attained because the power ON passage time is long although the amount of power remaining in the battery 30 is sufficient. If the amount of power remaining in the battery is 7.0 V or more to less than 7.5 V while the power ON passage time is less than 6 hours (case 2), the low level power saving mode is attained because the power ON passage time is not long although the amount of power remaining in the battery 30 is small. Further, if the amount of power remaining in the battery is 7.0 V or more to less than 7.5 V while the power ON passage time is more than 6 hours (case 3), the middle level power saving mode is attained because the amount of power remaining in the battery 30 is small and the power ON passage time is long. If the amount of power remaining in the battery is less than 7.0 V (case 4), the high level power saving mode is attained regardless of which the power ON passage time is long or short, because the amount of power remaining in the battery 30 is minute. In other cases, the normal mode is attained.

Then, the power saving mode setting processing will be described with reference to the flow chart shown in FIG. 6. First, the CPU 10 AD-converts the voltage of the battery 30 through the ADin terminal 16 so as to detect a battery remainder (i.e., the amount of power remaining in the battery) (S20). Next, by obtaining a difference between current time and power ON time, the power ON passage time is computed (S21) (corresponds to "power supply time measuring means"). Next, whether the amount of power remaining in the battery exceeds 7.5 V is determined (S22).

If the amount of power remaining in the battery exceeds 7.5 V (S22: YES), it is determined that the amount of power remaining in the battery is large. Next, whether or not the power ON passage time is over 6 hours is determined (S23) and a case where it is over 6 hours (S23: YES) falls under the case 1, in which the printing portion 50 turns into sleep mode (S24) while the Bluetooth module 20 turns into the low level power saving mode (S25). More specifically, to turn the printing portion 50 into sleep mode, circuits supplied with power through the logic system except the CPU 10 are actuated in power saving mode and of circuits supplied with power through the power system, the pulse motor 17 and thermal head 18 are turned to non-powered state. To turn the Bluetooth module 20 to the low level power saving mode, the CPU 10 transmits a RESET command to the CPU 22 in order to turn the CPU 22 from the scan mode to the command mode. Then, a scan parameter setting command for changing the scan cycle and scan period to low level power saving mode setting is transmitted and finally, a scan start command for changing the CPU 22 to the scan mode again is transmitted.

Next, a sleep enable time based on the amount of power remaining in the battery measured in S20 is obtained from the sleep enable time table 121 and that sleep enable time is compared with a power off setting time (S43). If the sleep enable time is shorter than the power off setting time (S43:YES), the sleep enable time is set as the power off setting time in the CPU 10. To set the power off setting time for the CPU 22 also to the sleep enable time, a RESET command is transmitted to change the CPU 22 to command mode and after that, an auto power off parameter setting command for changing the auto power off setting time to sleep enable time is transmitted and finally, a scan start command is transmitted to return to the scan mode (S44). If the auto power off setting time is shorter or equal (S43: NO), the auto power off setting time is not changed. Then, the processing returns to power saving processing.

If the power ON passage time is not over 6 hours although the amount of power remaining in the battery exceeds 7.5 V (S22: YES, S23: NO), whether or not the power ON passage time is over an hour is determined (S26). If it is over an hour, that is, the power ON passage time is an hour or more to less than 6 hours (S26: YES), the printing portion 50 turns to sleep mode (S27) while the Bluetooth module 20 is in the normal mode (S28). Then, the processing proceeds to S43, in which the sleep enable time based on the amount of power remaining in the battery computed in S20 is compared with the power off setting time (S43). If the sleep enable time is shorter than the power off setting time (S43: YES), the power off setting time on the CPU 10 and CPU 22 is changed (S44). Then, the processing returns to power saving processing.

If the power ON passage time is not an hour or more, that is, the power ON passage time is less than an hour (S26: NO), the printing portion 50 turns to sleep mode (S29) while the Bluetooth module 20 is in the normal mode (S30). Then, the processing returns to the power saving processing.

Further, if the amount of power remaining in the battery is not over 7.5 V, that is, less than 7.5 V (S22: NO), whether or not it is 7.0 or more is determined (S31). If it is over 7.0 V, that is, the amount of power remaining in the battery is 7.0 V or more to less than 7.5 V (S31: YES), it is determined that the amount of power remaining in the battery is low and then, whether or not the power ON passage time is over 6 hours is determined (S32). If the power ON passage time is over 6 hours (S32: YES), that case falls under the case 3 and consequently, the printing portion 50 turns to sleep mode (S33) while the Bluetooth module 20 is in the middle level power saving mode (S34). The processing proceeds to S43, in which a sleep enable time based on the amount of power remaining in the battery computed in S20 is compared with the power off setting time (S43). If the sleep enable time is shorter than the power off setting time (S43: YES), the power off setting time on the CPU 10 and CPU 22 is changed (S44). Then, the processing returns to power saving processing.

If the power ON passage time is not over 6 hours (S32: NO), whether or not the power ON passage time is over an hour is determined (S35). If the power ON passage time is over an hour, that is, the power ON passage time is an hour or more to less than 6 hours (S35: YES), that case falls under the case 2, in which the printing portion 50 turns to sleep mode (S36) while the Bluetooth module 20 is in the low level power saving mode (S37). Then, the processing proceeds to S43, in which the sleep enable time based on the amount of power remaining in the battery computed in S20 is compared with the power off setting time (S43). If the sleep enable time is shorter than the power off setting time (S43: YES), the power off setting time on the CPU 10 and CPU 22 is changed (S44). Then, the processing returns to power saving processing.

If the power ON passage time is not over an hour, that is, less than an hour (S35: NO), the printing portion 50 turns to sleep mode (S38) while the Bluetooth module 20 is in the normal mode (S39). Then, the processing proceeds to S43, in which the sleep enable time based on the amount of power remaining in the battery computed in S20 is compared with the power off setting time (S43). If the sleep enable time is shorter than the power off setting time (S43: YES), the power off setting time on the CPU 10 and CPU 22 is changed (S44). Then, the processing returns to power saving processing.

If the amount of power remaining in the battery is not over 7.0 V, that is, less than 7.0 V (S31: NO), that case falls under the case 4, in which because the amount of power remaining in the battery is minute, the printing portion 50 is in the sleep mode (S40) while the Bluetooth module 20 is in the high level power saving mode (S41). Then, a minimum value, for example, 30 minutes is set up as the power off setting time (S42). Then, the processing returns to power saving processing.

As described above, in the printing apparatus 1 of this embodiment, the power saving mode of the Bluetooth module 20 is changed depending on the amount of power remaining in the battery 30 and the power off passage time and further, the auto power off setting time can be changed depending on the amount of power remaining in the battery 30. The CPU 10 which executes the processings in S25, S28, S30, S34, S37, S39, S41 functions as, and is an example of, "mode changing means". The CPU 10 which executes the processings in S22, S31, S25, S28, S30, S34, S37, S39, S41 functions as, and is an example of, "first mode changeover control means". The CPU 10 which executes the processings in S23, S26, S32, S35, S25, S28, S30, S34, S37, S39, S41 functions as, and is an example of, "second mode changeover control means". The CPU 10 which executes the processings in S22, S23, S26, S31, S32, S35, S25, S28, S30, S34, S37, S39, S41 functions as, and is an example of, "third mode changeover control means". The CPU 10 which executes the processings in S22, S31, S42, S43, S44 functions as, and is an example of, "reference time changing means".

The electronic apparatus provided with communicating module of the present invention is not restricted to the above-described embodiments, but needless to say, the present invention may be modified in various ways. Although in the above embodiment, the portable printing apparatus 1 is exemplified as the electronic apparatus, the electronic apparatus is not restricted to this example, but may be, for example, a desktop printing apparatus, label printer, electronic memo pad, PDA, pocket computer, camera, personal computer, security device or the like.

Although according to the above embodiment, the communication system is Bluetooth and as the communicating module, the Bluetooth module 20 is used, the communicating method is not restricted to Bluetooth but it is permissible to adopt other electric wave communication, infrared ray communication or optical communication, for example.

Although according to the above embodiment, the predetermined battery remainder is 7.0 V, 7.5 V and the predetermined time is 6 hours, 1 hour, these values are not restricted to the above-described embodiment but may be determined corresponding to consumption of power required by an electronic apparatus which the present invention is applied to. Further, the values of the scan cycle and scan period on power saving mode and the number of the power saving modes are not restricted to the above-described embodiment, but may be other values.

Meanwhile, the electronic apparatus provided with communicating module of the present invention can be applied to, for example, the desktop printing apparatus, label printer, electronic memory pad, PDA, pocket computer, camera, personal computer, security device and the like.

In the illustrated embodiment, a controller (CPU 10 and/or CPU 22) preferably is implemented using a suitably programmed general purpose computer, e.g., a microprocessor, microcontroller or other processor device (CPU or MPU). It will be appreciated by those skilled in the art, that the controller also can be implemented as a single special purpose integrated circuit (e.g., ASIC) having a main or central processor section for overall, system-level control, and separate sections dedicated to performing various different specific computations, functions and other processes under control of the central processor section. The controller also can be implemented using a plurality of separate dedicated or programmable integrated or other electronic circuits or devices (e.g., hardwired electronic or logic circuits such as discrete element circuits, or programmable logic devices such as PLDs, PLAs, PALs or the like). The controller also can be implemented using a suitably programmed general purpose computer in conjunction with one or more peripheral (e.g., integrated circuit) data and signal processing devices. In general, any device or assembly of devices on which a finite state machine capable of implementing the described procedures can be used as the controller of the invention.

## Claims

1. An electronic apparatus comprising:
non-operation time measuring means for measuring a non-operation time in which the electronic apparatus is inactive;
power supply shutdown means for, when the non-operation time measured by the non-operation time measuring means exceeds a reference time, shutting down the power from a battery of the electronic apparatus;
remainder measuring means for measuring an amount of power remaining in the battery; and
reference time changing means for changing the reference time based on the amount of power remaining in the battery measured by the remainder measuring means.

2. The electronic apparatus according to claim 1, further comprising a communicating module by which the electronic apparatus communicates with an external apparatus.

3. The electronic apparatus according to claim 1 or 2, comprising:
mode changing means for changing a mode of the communicating module between plural modes that differ from each other in their rates of power consumption.

4. The electronic apparatus according to claim 3, wherein the reference time changing means changes the reference time by shortening the reference time if the amount of power remaining in the battery is below a specified remainder value.

5. The electronic apparatus according to claim 3 or 4, further comprising first mode changeover control means for changing the mode using the mode changing means based on the amount of power remaining in the battery measured by the remainder measuring means.

6. The electronic apparatus according to claim 5, wherein the first mode changeover control means, when the amount of power remaining in the battery measured by the remainder measuring means is below a specified remainder value, changes the mode using the mode changing means.

7. The electronic apparatus according to claim 5 or 6, wherein the first mode changeover control means, if the amount of power remaining in the battery measured by the remainder measuring means exceeds the specified remainder value, changes the mode to a first mode using the mode changing means, and if the amount of power remaining in the battery is below the specified remainder value, changes the mode to a second mode in which consumption of power by the communicating module is lower than in the first mode.

8. The electronic apparatus according to one of claims 3 to 7, further comprising:
power supply time measuring means for measuring a power supply time since power has begun to be supplied from the battery to the electronic apparatus; and
second mode changeover control means for changing the mode using the mode changing means based on the power supply time measured by the power supply time measuring means.

9. The electronic apparatus according to claim 8, wherein the second mode changeover control means, if the power supply time measured by the power supply time measuring means is over a specified time, changes the mode using the mode changing means.

10. The electronic apparatus according to claim 8 or 9, wherein the second mode changeover control means, if the power supply time measured by the power supply time measuring means is less than the specified time, changes to a first mode using the mode changing means, and if the power supply time is over the specified time, changes to a second mode in which consumption of power by the communicating module is lower than in the first mode.

11. The electronic apparatus according to one of claims 3 to 7, further comprising:
power supply time measuring means for measuring a power supply time that has passed since a power has begun to be supplied from the battery to the electronic apparatus; and
third mode changeover control means for changing over the mode using the mode changing means based on the amount of power remaining in the battery measured by the remainder measuring means and the power supply time measured by the power supply time measuring means.

12. The electronic apparatus according to claim 11, wherein the third mode changeover control means, if a combination of the amount of power remaining in the battery measured by the remainder measuring means and the power supply time measured by the power supply time measuring means falls under a specified type classified depending on a combination of the remainder value and power supply time, changes the mode using the mode changing means.

13. The electronic apparatus according to claim 11 or 12, wherein the third mode changeover control means, if the amount of power remaining in the battery measured by the remainder measuring means is over a first remainder value while the power supply time measured by the power supply time measuring means is over a specified time, and if the amount of power remaining in the battery is equal to or greater than a second remainder value, which is smaller than the first remainder value, and less than the first remainder value while the power supply time is less than a specified time, changes the mode to a first mode using the mode changing means,
if the amount of power remaining in the battery is equal to or greater than the second remainder value and less than the first remainder value while the power supply time is over the specified time, changes the mode to a second mode in which consumption of power by the communicating module is smaller than in the first mode, and
if the amount of power remaining in the battery is less than the second remainder value, changes the mode to a third mode in which consumption of power by the communicating module is smaller than in the second mode.
